# EUROPÄISCHE PATENTSCHRIFT

(11) **EP 1 584 499 B1**
(45) Veröffentlichungstag und Bekanntmachung des Hinweises auf die Patenterteilung: **11.02.2009**
(21) Anmeldenummer: 05005548.2
(22) Anmeldetag: 15.03.2005
(51) Int. Cl.: B60D 1/54, B60D 1/06

(54) **Anhängerkupplung**
Trailer coupling
Attelage de remorque

(30) Priorität: 08.04.2004 DE 202004005807 U
(43) Veröffentlichungstag der Anmeldung: 12.10.2005
(73) Patentinhaber: WESTFALIA - Automotive GmbH, 33378 Rheda-Wiedenbrück (DE)
(72) Erfinder: Abels, Frank O., 29633 Munster (DE); Von Alm, Günther, 29614 Soltau (DE)
(74) Vertreter: Bregenzer, Michael

(56) Entgegenhaltungen:
- EP-A- 1 380 445
- DE-A1- 10 023 640
- DE-A1- 10 023 641
- DE-A1- 10 104 185
- DE-U1-6202004 006 66

## Beschreibung

Die Erfindung betrifft eine Anhängekupplung gemäß dem Oberbegriff des Anspruchs 1.

Eine solche Anhängekupplung geht aus der DE 100 23 640 A1 hervor.

Ein mit einer Kugel versehener Kupplungsarm wird mittels einer Vorrichtung zum Absenken und Schwenken aus einer von außerhalb des Kraftfahrzeuges z.B. nicht sichtbaren Ruhestellung in eine zum Befestigen eines Anhängers geeignete Betriebsstellung motorisch oder manuell angetrieben bewegt.

Es sind verschiedene Ausführungsformen solcher motorisch angetriebener Anhängekupplungen bekannt, z.B. aus der DE 198 26 618, DE 199 44 264 und DE 100 04 523, bei denen eine senkrecht stehende Kugelstange durch motorischen Antrieb zunächst axial nach unten bewegt werden, so dass die Kugel der Kugelstange unterhalb des Stossfängers liegt, danach wird die Kugelstange um ca. 90 DEG seitlich verdreht und anschließend motorisch wieder angehoben, bis die Kugelstange sich in der Betriebsstellung befindet. Diese Ausführungsformen haben folgende Nachteile:

Die Bodenfreiheit reicht (je nach Fahrzeugtyp) gelegentlich nicht aus, besonders wenn das Fahrzeug über einer Bordsteinkante steht.

Die senkrecht angeordnete Kugelstange hat eine Bauform, die bei modernen Fahrzeugen mit besonders niedrig liegender Kofferraumkante nicht in das Fahrzeug integriert werden kann.

Aufwendige Konstruktion - teilweise mit 2 Motoren - um die drei Bewegungsschritte Senken, Schwenken, Heben zu realisieren.

Aufwendige Steuerung der Bewegungsschritte entweder mechanisch oder elektrisch.

Passgenaue und damit teure Führungen sind erforderlich, die wegen der eingeleiteten Betriebskräfte teure Materialien und Bearbeitungsverfahren notwendig machen.

Es sind weitere Ausführungsformen bekannt, bei denen die Kugelstange an einem fahrzeugfesten Drehlager angeordnet sind und durch einen Motor die Kugelstange aus einer unterhalb des Fahrzeugbodens befindlichen Ruhestellung in die Betriebsstellung geschwenkt wird, wie z.B. in DE 196 54 867 und DE 196 12 959 oder WO 98/57 813 beschrieben. Diese Ausführungsformen haben folgende Nachteile:

Die Bodenfreiheit reicht bei bestimmten Ausführungsformen und Fahrzeugen ebenfalls nicht aus.

Bei einigen Fahrzeugformen sind sie wegen der Art des Fahrzeugbodens nur schwer oder gar nicht zu integrieren.

Die Getriebemotoren sind hohen Belastungen ausgesetzt, wodurch sie aufwendig und teuer werden. Es sind bei bestimmten Ausführungsformen zum Festsetzen der Kugelstange zusätzliche Verriegelungsvorrichtungen erforderlich, die starkem Verschleiß unterliegen und teuer in der Herstellung sind.

Die Hauptschwenklager unterliegen starken Betriebskräften und müssen daher in aufwendigen und teuren Techniken hergestellt werden.

Es sind schließlich Ausführungsformen bekannt, z.B. DE 100 23 640 und DE 101 04 185, bei denen die Kugelstange schwenkbar in einem Lagerblock sitzt, wobei der Lagerblock selber um eine in Fahrzeugrichtung angeordnete Achse schwenken kann, wodurch eine senkende und danach schwenkende Bewegung erzeugt wird. Diese Ausführungsform, die sich zwar sehr gut in Fahrzeuge integrieren läßt, hat dennoch folgende Nachteile:

Zur Realisierung der Bewegung sind unter Umständen 2 Motoren erforderlich.

Es gibt wiederum drei Bewegungsschritte - Senken - Drehen - Heben - dazu ist eine spezielle Steuerung erforderlich.

Die Herstellung ist wegen zweier großer, die ganz Last aufnehmenden Lager aufwendig und teuer.

Nachdem verschiedene motorisch angetriebene Anhängekupplungen mittlerweile produziert werden und es sich herausgestellt hat, dass bekannte Typen in der Herstellung für den automobilen Massenmarkt zu teuer sind, ist es die Aufgabe der Erfindung, eine motorisch angetriebene Anhängekupplung zu schaffen, die besonders einfach und billig in der Herstellung ist.

Zur Lösung der Aufgabe ist eine Anhängekupplung gemäß der technischen Lehre des Anspruchs 1 vorgesehen.

Bei der erfindungsgemäßen Anhängekupplung kommen keine Drehlager, Verriegelungsvorrichtungen oder andere Bauteile mit hoher Fertigungsgenauigkeit zur Anwendung. Die zu bewegenden Teile werden innerhalb eines Gehäuses z.B. auf einer schiefen Ebene verschoben und ohne Verwendung eines Drehlagers z.B. über eine Kulissenführung in die Gebrauchsstellung befördert und dort durch eine Spindel nach dem Prinzip des Schraubstocks festgeklemmt. Durch den Anstellwinkel der schiefen Ebene wird die Absenkhöhe des Kugelarmes konstruktiv auf das jeweilige Fahrzeug angepasst.

Ein Ausführungsbeispiel der Erfindung ist in den folgenden Abbildungen dargestellt. Aus Gründen der Übersichtlichkeit wurde auf die Darstellung des Trägers, mit dem die Anhängerkupplung am Fahrzeug befestigt wird, verzichtet. Ebenso ist die Deckplatte des Gehäuses der Anhängerkupplung nicht dargestellt, da sie den Blick auf die Funktionsbaugruppen verbirgt.

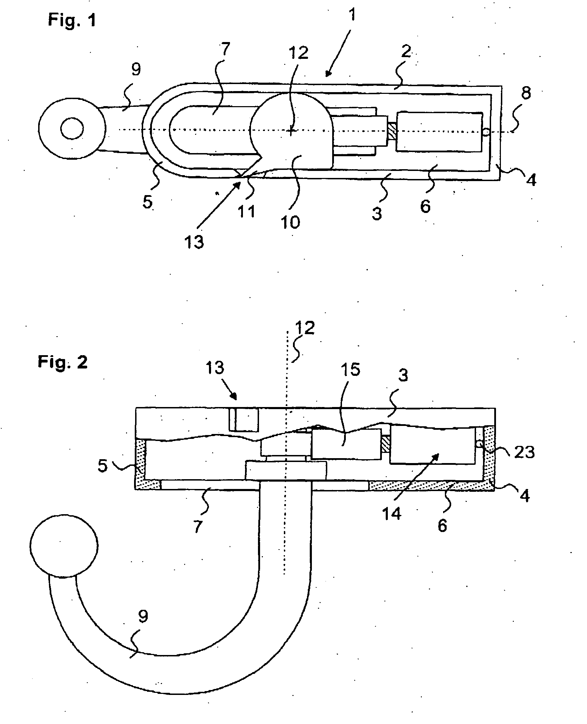

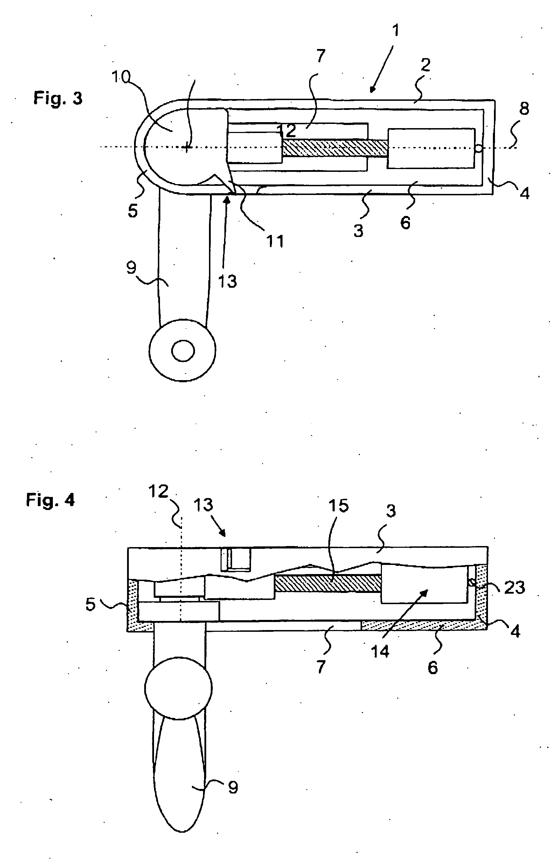

Anhand der Figuren 1 bis 19 wird das Ausführungsbeispiel erläutert.

Eine beispielhafte Ausführung der erfindungsgemäßen Anhängerkupplung besteht aus einem wannenförmigen Gehäuse 1 mit Seitenwänden 2,3, einer Gehäuserückwand 4, einer vorderen Gehäusewand 5 sowie einem Gehäuseboden 6 mit dem Schlitz 7. Im Gehäuseboden 6 ist ein Schlitz 7 angeordnet.

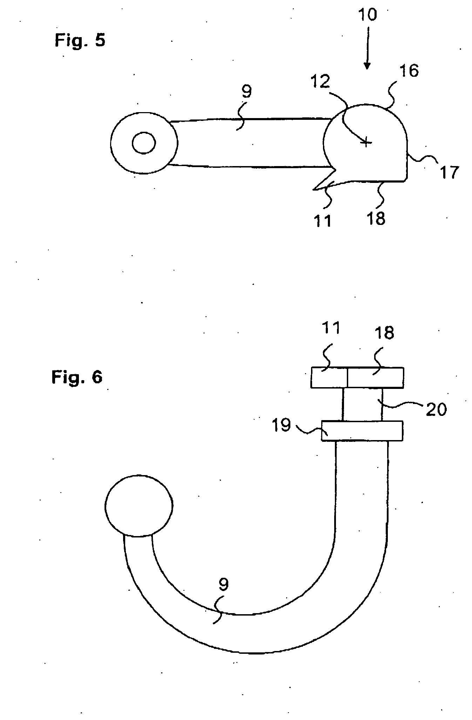

Durch den Schlitz 7 im Gehäuseboden 6 ragt ein Kugelarm 9 hindurch. Der sich im Gehäuse 1 befindliche Teil des Kugelarmes 9 ist als Drehachsglied 10 ausgeführt. Das Drehachsglied 10 besitzt im unteren Teil eine zylindrische Form, dessen Durchmesser größer als eine lichte Weite des Schlitzes 7. Der obere Teil des Drehachsgliedes 10 ist asymmetrisch und wird in Fig. 5 näher beschrieben. Zwischen dem oberen und unteren Teil des Drehachsgliedes 10 ist eine Ringnut 20 angeordnet, in die eine Anlenkung 15 eines Linearantriebes 14 eingreift. Der Linearantrieb 14 ist an der Gehäuserückwand 4 in einem Lager 23 schwenkbar gelagert.

Fig. 1 zeigt die Anhängerkupplung in Nichtgebrauchsstellung in einer Draufsicht, Fig. 2 in einer Seitenansicht.

Der Linearantrieb 14 ist ganz eingefahren, der Kugelarm 9 ist im Schlitz 7 in Richtung Gehäuserückwand 4 zurückgezogen. Der Kugelarm 9 steht parallel zur Längsachse 8.

Fig. 3 zeigt die Anhängekupplung in der Gebrauchsstellung in einer Draufsicht, Fig. 4 in einer Seitenansicht.

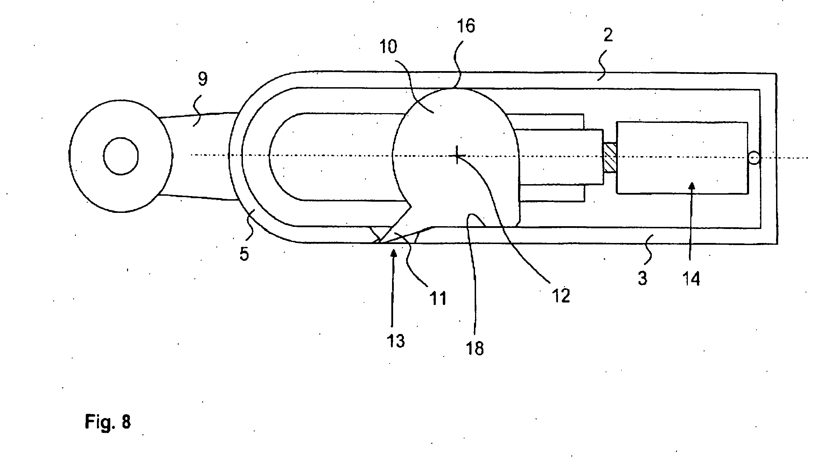

Der an der Ringnut 20 am Drehachsglied 10 angreifende Linearantrieb 14 ist ausgefahren und hat den Kugelarm 9 gegen die vordere Gehäusewand 5 geschoben. Während dieser Bewegung hat der Kugelarm 9 durch das Zusammenwirken eines Hakens 11 und eines Gehäusedurchbruchs 13 eine Schwenkbewegung um eine Schwenkachse 12 durchgeführt, welche in den Fig. 8 bis 17 näher erläutert wird.

In der Gebrauchsstellung ist der Kugelarm 9 mit dem Haken 11, einem teilzylindrischen Teil 16 und einer geraden Fläche 17 des Drehachsgliedes 10 im Gehäusedurchbruch 13, der vorderen Gehäusewand 5 und der hinteren Seitenwand 2 festgesetzt. Dadurch wird ein Großteil der Kräfte, die von außen z.B. durch einen Anhänger auf den Kugelarm 9 einwirken, in das Gehäuse 1 eingeleitet. Nur ein kleiner Teil dieser Kräfte wirkt auf den Linearantrieb 14.

Fig. 5 zeigt den Kugelarm 9 mit dem Drehachsglied 10 in einer Draufsicht, Fig. 6 in einer Seitenansicht.

Das Drehachsglied 10 besteht aus einem unteren zylindrischen Teil 19 und einem oberen Teil, der aus einem teilzylindrischen Teil 16, geraden Flächen 17, 18 eines teilquaderförmigen Körpers und dem Haken 11 besteht. Die Fläche 17 geht tangentenförmig in den Teilzylinder 16 über. Zwischen dem unteren und oberen Teil ist eine Ringnut 20 angeordnet, an der der Linearantrieb 14 mit der Anlenkung 15 angreift. Die beiden geraden Flächen 17, 18 stehen beim Ausführungsbeispiel im rechten Winkel zueinander und bestimmen damit den Schwenkwinkel des Kugelarmes 9. Durch konstruktive Änderung des Winkels zwischen den geraden Flächen 17, 18 kann der Schwenkwinkel an das Zielfahrzeug angepasst werden.

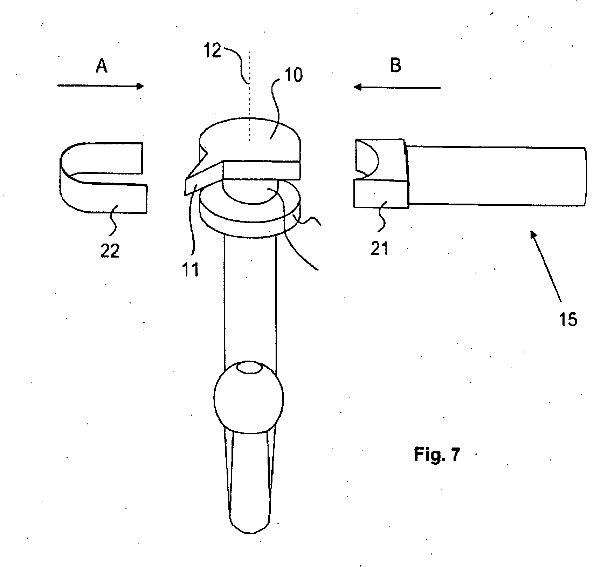

Fig. 7 zeigt die Verbindung zwischen Kugelarm 9 und Linearantrieb 14 in einer Explosionsdarstellung.

An der Anlenkung 15, die z.B. Teil einer Gewindehülse eines Spindelantriebes sein kann, befindet sich auf der dem Drehachsglied 10 zugewandten Seite eine teilkreisförmige Lagerfläche 21, deren Radius dem Radius der Ringnut 20 entspricht. Eine U-förmige Lagerfläche 22, die z.B. als U-förmiger Blechstreifen ausgeführt sein kann, umfasst den Kugelarm 9 in der Ringnut 20 und bildet bei Zusammenführung beider Teile in Pfeilrichtungen A,B mit der Lagerfläche 21 ein kreisförmiges Lager, in dem sich der Kugelarm 9 um die Schwenkachse 12 drehen kann. Die Verbindung zwischen den Lagerteilen 21,22 ist hier nicht näher dargestellt, sie kann z.B. durch eine Schraub- oder Nietverbindung realisiert sein.

Die Fig. 8 bis 12 zeigen den Ablauf eines Ausschwenkvorganges.

In Fig. 8 befindet sich der Kugelarm 9 in der Nichtgebrauchsstellung. Der Haken 11 ragt in Richtung vorderer Gehäusewand 5 in den Durchbruch 13. Die gerade Fläche 18 und der teilzylindrische Teil 16 des Drehachsgliedes 1.0 liegen an der hinteren und vorderen Gehäusewand 2,3 an.

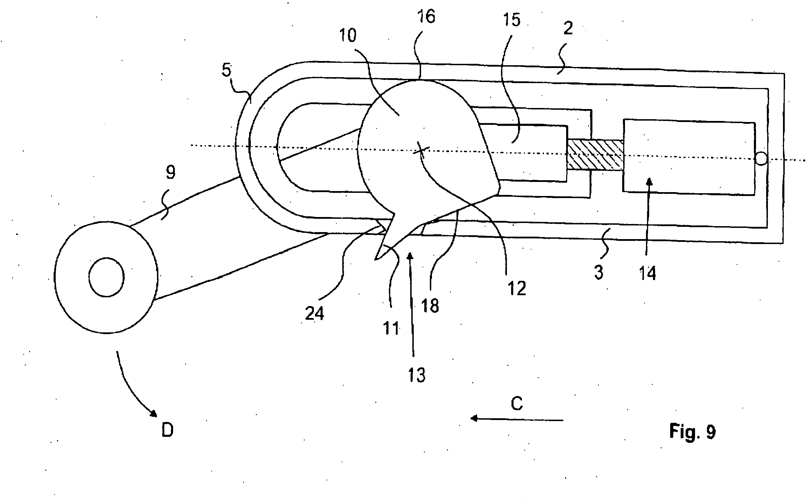

In Fig. 9 hat der Linearantrieb 14 die Anlenkung 15 und damit den Kugelarm 9 in Pfeilrichtung C bewegt. Der Haken 11 liegt an einer Seitenkante 24 des Durchbruchs 13 an und hat sich durch den Durchbruch 13 aus dem Gehäuse 1 herausgeschoben. Dadurch hat der Kugelarm 9 um die Achse 12 eine Schwenkbewegung in Pfeilrichtung D eingeleitet. Die gerade Fläche 18 berührt die vordere Gehäusewand 3 nicht mehr, während der teilzylindrische Teil 16 des Drehachsgliedes 10 noch an der hinteren Seitenwand 2 anliegt.

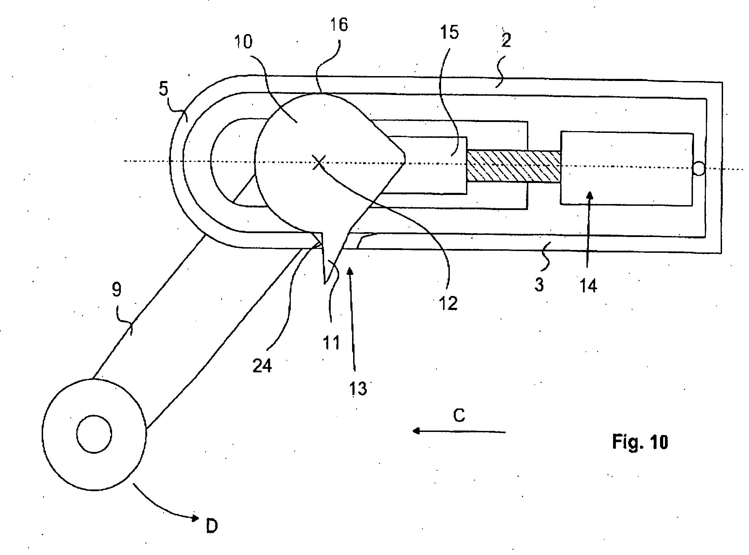

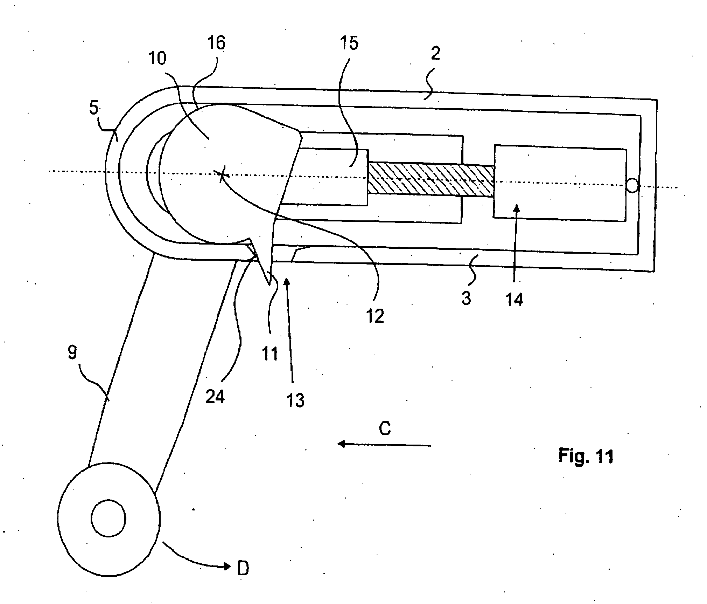

In Fig. 10 und 11 ist das Schwenken in Pfeilrichtung D soweit fortgeschritten, dass der teilzylindrische Teil 16 des Drehachsgliedes 10 sowohl an der hinteren Seitenwand 2 als auch an der vorderen Seitenwand 3 des Gehäuses 1 anliegt.

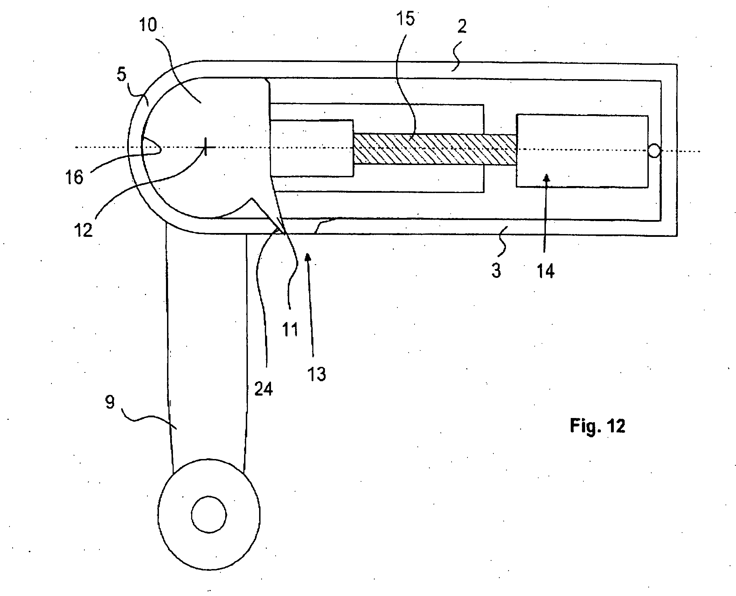

In Fig. 12 ist der Schwenkvorgang abgeschlossen, der Kugelarm 9 ist in der Gebrauchsstellung. Die gerade Fläche 17 liegt an der hinteren Seitenwand 2, der teilzylindrische Teil 16 an der vorderen Gehäusewand 5 und der Haken 11 an der Seitenkante 24 an. Dadurch ist das Drehachsglied 10 und damit der Kugelarm 9 durch den Druck des Linearantriebes 14 nach dem Prinzip des Schraubstockes festgespannt. Solange der Linearantrieb 14 sich nicht wieder in die entgegengesetzte Richtung bewegt, bleibt der Kugelarm 9 fest in der Gebrauchsstellung, von außen einwirkende Kräfte werden in das Gehäuse und entlang der Längsachse 8 in den Linearantrieb 14 eingeleitet.

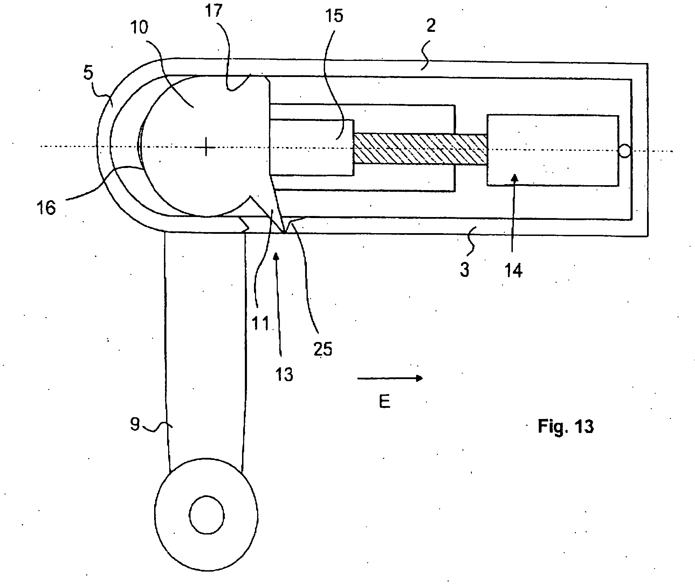

Die Fig. 13 bis 17 zeigen die Bewegung des Kugelarmes 9 von der Gebrauchsstellung in die Nichtgebrauchsstellung.

In Fig. 13 hat der Linearantrieb 14 über die Anlenkung 15 den Kugelarm 9 soweit in Pfeilrichtung E gezogen, bis der Haken 11 eine Seitenkante 25 des Durchbruchs 13 berührt. Der teilzylindrische Teil 16 des Drehachsgliedes 10 hat sich von der vorderen Gehäusewand 5 gelöst und liegt nun an der vorderen Seitenwand 3 an, die gerade Fläche 17 berührt weiterhin die hintere Seitenwand 2.

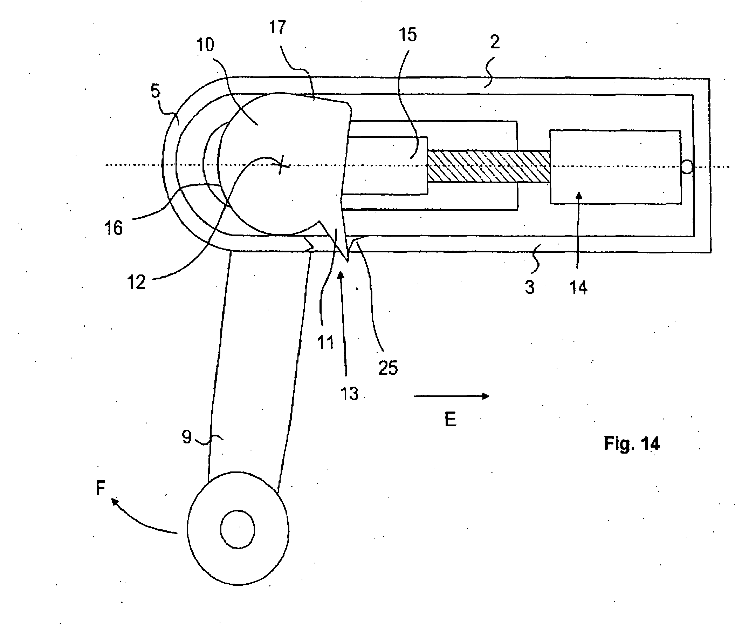

In Fig. 14 ist der Schwenkvorgang um die Schwenkachse 12 eingeleitet. Der Linearantrieb 14 zieht weiterhin das Drehachsglied 10 und damit den Kugelarm 9 in Pfeilrichtung E. Der Haken 11 liegt an der Seitenkante 25 des Durchbruchs 13 an und hat sich durch den Durchbruch 13 aus dem Gehäuse 1 herausgeschoben. Dadurch hat der Kugelarm 9 um die Achse 12 eine Schwenkbewegung in Pfeilrichtung F eingeleitet. Die gerade Fläche 17 berührt die hintere Gehäusewand 2 nicht mehr, jetzt liegt der teilzylindrische Teil 16 des Drehachsgliedes 10 an der hinteren Seitenwand 2 an.

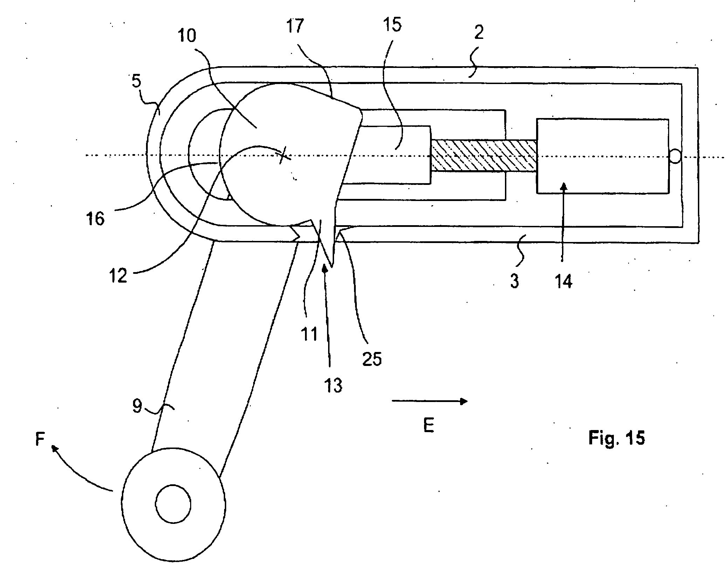

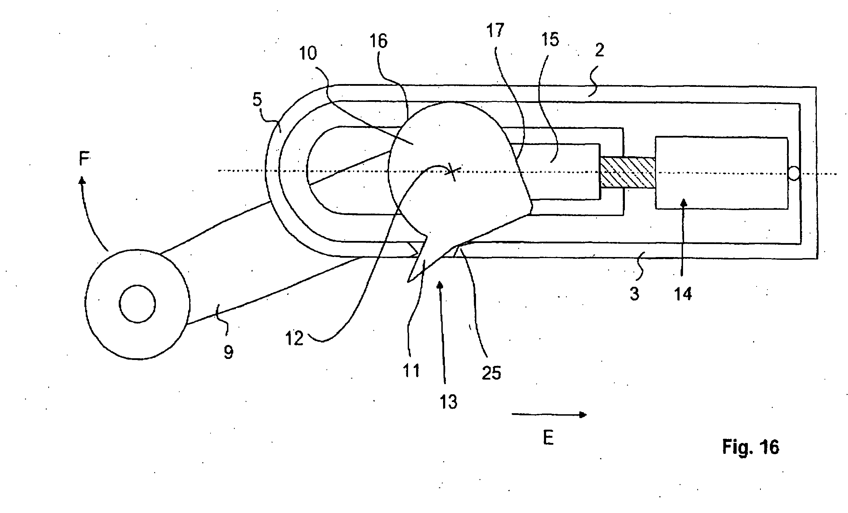

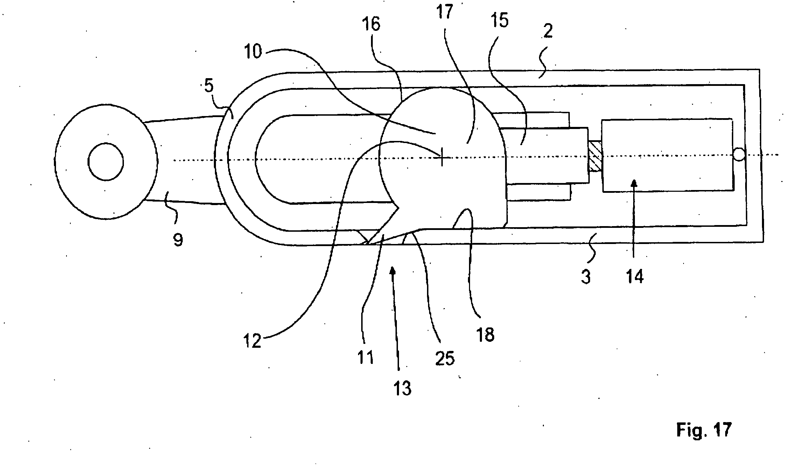

Die Fig. 15 und 16 zeigen weitere Schritte des Schwenkvorganges. In Fig. 17 hat der Kugelarm 9 seine Nichtgebrauchsstellung erreicht. Der teilzylindrische Teil 16 des Drehachsgliedes 10 liegt an der hinteren Gehäusewand 2, die gerade Fläche 18 liegt an der vorderen Gehäusewand 3 an. Der Haken 11 ragt in den Durchbruch 13.

## Patentansprüche

1. Anhängekupplung für Kraftfahrzeuge, insbesondere Personenkraftwagen, mit einem Kupplungsarm (9), der einends ein hochstehend angeordnetes Kopfstück zum lösbaren Befestigen eines Anhängers trägt und anderenends mit einem bewegbar in einem Gehäuse (1) gelagerten Drehachsglied (10) fest verbunden ist, wobei der Kupplungsarm (12) mittels einer manuell oder kraftbetriebenen Vorschubeinrichtung zwischen einer nach hinten gerichteten Gebrauchsstellung und einer weiter vorne angeordneten Nichtgebrauchsstellung hin und her verstellbar ist, wobei sich die Verstellbewegung aus zwei Bewegungen zusammensetzt, bei denen das Drehachsglied (10) ausgehend von der Nichtgebrauchsstellung in einem ersten Bewegungsäbschnitt in einem Gehäuse (1) verschoben und in einem zweiten Bewegungsabschnitt verschwenkt wird, so dass der Kupplungsarm (12) nach Vollendung beider Bewegungen, die sich überlagern können, die Gebrauchsstellung einnimmt, **dadurch gekennzeichnet, dass** das Drehachsglied (10) einen teilzylindrischen Teil (16) und einen quaderförmigen Teil aufweist, dass eine Seite (17) des quaderförmigen Teils tangential in den teilzylindrischen Teil (16) übergeht und zwischen einer zu der Seite (17) winkeligen Seite (18) des quaderförmigen Teils und dem teilzylindrischen Teil (16) eine hakenförmige Nase (11) angeordnet ist, wobei eine Mittelachse (12) des teilzylindrischen Teils (16) in eine Mittelachse des Kupplungsarmes (9) übergeht und der Abstand der Seiten (17, 18) von der Mittelachse des teilzylindrischen Teils (16) dem Radius des teilzylindrischen Teils (16) entspricht, dass die hakenförmige Nase (11) in eine Ausnehmung (13) des das Drehachsglied (10) umhüllenden Gehäuses (1) eingreift und das Drehachsglied (10) bei einer durch einen manuellem Antrieb oder einen Stellantrieb (14) bewirkten linearen Bewegung im Gehäuse (1) um einen durch einen Winkel zwischen den Seiten (17, 18) bestimmten Schwenkwinkel des Kugelarmes (9) um die Mittelachse (12) schwenkt, bis der teilzylindrische Teil des Drehachsgliedes (10) in eine u-förmige passende Aufnahme des Gehäuses (1) eingreift und die hakenförmige Nase (11) am Gehäuse (1) anschlägt und dort durch den Antrieb (14) einseitig verdrehsicher gehalten wird und die Seite (17) zur Verdrehsicherung in eine entgegengesetzte Drehrichtung des Drehachsgliedes (10) an einer Wand (2) des Gehäuses (1) anliegt.

2. Anhängekupplung nach Anspruch 1, **dadurch gekennzeichnet, dass** das Drehachsglied (10) um ca. 90 Grad in die Gebrauchsstellung geschwenkt wird.

3. Anhängekupplung nach Anspruch 1, **dadurch gekennzeichnet, dass** das Drehachsglied (10) durch den Pressdruck des Antriebes (14) einseitig verdrehsicher gehalten wird.

4. Anhängekupplung nach Anspruch 1, **dadurch gekennzeichnet, dass** die Ausnehmung (13) von einem Durchbruch gebildet ist.

5. Anhängekupplung, nach einem der vorhergehenden Ansprüche, **dadurch gekennzeichnet, dass** der teilzylindrische Teil und der quaderförmige Teil insgesamt ein schildförmiges Teil bilden.

6. Anhängekupplung nach einem der vorhergehenden Ansprüche, **dadurch gekennzeichnet, dass** das Gehäuse (1) einen durchgehenden Gehäuseboden (6) oder mindestens zwei hintereinander in unterschiedlichen Winkeln zur Horizontale angeordnete Gehäusebodenteile aufweist.

7. Fahrzeug mit einer Anhängekupplung nach einem der vorhergehenden Ansprüche, **dadurch gekennzeichnet, dass** das Gehäuse (1) eine Schrägstellung innerhalb des Fahrzeugs einnimmt.

## Claims

1. Trailer coupling for motor vehicles, in particular motor cars, with a coupling arm (9) supporting a raised head section for releasably attaching a trailer at one end, while the other end is permanently connected to a hinge element (10) which is movably bearing-mounted in a housing (1), wherein the coupling arm (12) is adjustable by means of a manually or power-driven feed mechanism between a position of use in which it is oriented towards the rear and an inoperative position which is further forward, wherein the adjusting movement combines two movements whereby the hinge element (10), starting from the inoperative position, is displaced in a housing (1) in a first movement section and swivelled in a second movement section, so that the coupling arm (12) adopts its position of use on completion of both movements, which may be superimposed on one another, **characterised in that** the hinge element (10) comprises a partially cylindrical part (16) and a rectangular part, **in that** a side (17) of the rectangular part tangentially merges into the partially cylindrical part (16), and **in that**, between a side (18) of the rectangular part which extends at an angle relative to the side (17) and the partially cylindrical part (16), a hook-shaped nose (11) is provided, a central axis (12) of the partially cylindrical part (16) merging into a central axis of the coupling arm (9) and the distance of the sides (17, 18) from the central axis (12) of the partially cylindrical part (16) corresponding to the radius of the partially cylindrical part (16), and **in that** the hook-shaped nose (11) engages a recess (13) of the housing (1) enclosing the hinge element (10) and pivots the hinge element (10) in a linear movement effected in the housing (1) by a manual drive or an actuator (14) about the central axis (12) through a pivoting angle of the ball arm (9) determined by the angle between the sides (17, 18) until the partially cylindrical part of the hinge element (10) engages a matching U-shaped location of the housing (1) and the hook-shaped nose (11) strikes the housing (1) and is there non-rotatably held on one side by the drive (14), while the side (17) bears against a wall (2) of the housing (1) to prevent a rotation in the opposite direction of the hinge element (10).

2. Trailer coupling according to claim 1, **characterised in that** the hinge element (10) is swivelled into its position of use through an angle of approximately 90 degrees.

3. Trailer coupling according to claim 1, **characterised in that** the hinge element (10) is held non-rotatably on one side by the pressure of the drive (14).

4. Trailer coupling according to claim 1, **characterised in that** the recess (13) is represented by a through hole.

5. Trailer coupling according to any of the preceding claims, **characterised in that** the partially cylindrical part and the rectangular part together form a shield-shaped part.

6. Trailer coupling according to any of the preceding claims, **characterised in that** the housing (1) has a continuous housing base (6) or at least two housing base parts disposed one behind the other at different angles relative to the horizontal,

7. Vehicle with a trailer coupling according to any of the preceding claims, **characterised in that** the housing (1) is in an inclined position within the vehicle.

## Revendications

1. Attelage de remorque pour véhicules automobiles, en particulier pour voitures de tourisme, avec un bras d'attelage (9) qui porte au niveau d'une extrémité une traverse d'attelage disposée en position verticale pour la fixation amovible d'une remorque et au niveau de l'autre extrémité est fixement relié à un élément d'axe de rotation (10) logé de manière mobile dans un boîtier (1), le bras d'attelage (12) pouvant être réglé alternativement au moyen d'un dispositif d'avance manuel ou mécanique entre une position d'utilisation dirigée vers l'arrière et une position de non-utilisation disposée plus en avant, le mouvement de réglage se composant de deux mouvements, pour lesquels l'élément d'axe de rotation (10) est décalé en partant de la position de non-utilisation dans une première partie de mouvement dans un boîtier (1) et est pivoté dans une deuxième partie de mouvement de sorte que le bras d'attelage (12) occupe une fois les deux mouvements achevés qui peuvent se superposer, la position d'utilisation, **caractérisé en ce que** l'élément d'axe de rotation (10) présente une partie (16) partiellement cylindrique et une partie parallélépipédique, **en ce qu'**un côté (17) de la partie parallélépipédique se prolongeant tangentiellement en la partie (16) partiellement cylindrique et un nez (11) en forme de crochet est disposé entre un côté (18) en angle par rapport au côté (17) de la partie parallélépipédique et la partie (16) partiellement cylindrique, un axe médian (12) de la partie (16) partiellement cylindrique se prolongeant en un axe médian du bras d'attelage (9) et la distance des côtés (17, 18) par rapport à l'axe médian de la partie (16) partiellement cylindrique correspondant au rayon de la partie (16) partiellement cylindrique, **en ce que** le nez (11) en forme de crochet s'engage dans un évidement (13) du boîtier (1) enveloppant l'élément d'axe de rotation (10) et l'élément d'axe de rotation (10) pivote lors d'un mouvement linéaire provoqué par un entraînement manuel ou un servo-entraînement (14) dans le boîtier (1) d'un angle de pivotement déterminé par un angle entre les côtés (17, 18) du bras d'attelage (9) autour de l'axe médian (12) jusqu'à ce que la partie partiellement cylindrique de l'élément d'axe de rotation (10) s'engage dans un logement adapté en forme de u du boîtier (1) et le nez (11) en forme de crochet bute contre le boîtier (1) et y soit maintenu par l'entraînement (14) d'un côté sans possibilité de rotation et le côté (17) repose sur une paroi (2) du boîtier (1) pour le blocage en rotation dans un sens de rotation opposé de l'élément d'axe de rotation (10).

2. Attelage de remorque selon la revendication 1, **caractérisé en ce que** l'élément d'axe de rotation (10) est pivoté d'environ 90 degrés dans la position d'utilisation.

3. Attelage de remorque selon la revendication 1, **caractérisée en ce que** l'élément d'axe de rotation (10) est maintenu d'un côté sans possibilité de rotation par la force de pression de l'entraînement (14).

4. Attelage de remorque selon la revendication 1, **caractérisé en ce que** l'évidement (13) est formé par un percement.

5. Attelage de remorque selon l'une quelconque des revendications précédentes, **caractérisé en ce que** la partie partiellement cylindrique et la partie parallélépipédique forment dans l'ensemble une partie en forme de bouclier.

6. Attelage de remorque selon l'une quelconque des revendications précédentes, **caractérisé en ce que** le boîtier (1) présente un fond de boîtier (6) continu ou au moins deux parties de fond de boîtier disposées l'une derrière l'autre dans des angles différents par rapport à l'horizontale.

7. Véhicule avec un attelage de remorque selon l'une quelconque des revendications précédentes, **caractérisé en ce que** le boîtier (1) occupe une position inclinée à l'intérieur du véhicule.
